# EUROPEAN PATENT APPLICATION

(11) **EP 4 338 922 A1**
(43) Date of publication of application: **20.03.2024**
(21) Application number: 23197973.3
(22) Date of filing: 18.09.2023
(51) Int. Cl.: B29C 44/04, B29C 44/34, B29C 44/36, B29B 7/40, B29B 7/74

(54) **DISPENSING HEAD, STATION AND METHOD FOR MOLDING POLYURETHANE**

(30) Priority: 19.09.2022 IT 202200019098
(71) Applicant: Ama.Gusberti S.r.l., 27029 Vigevano (Pavia) (IT)
(72) Inventor: GRECO, Stefano, 27029 Vigevano (PV) (IT)
(74) Representative: Belloni, Giancarlo

(57) **Abstract**

The invention relates to a head 30 for dispensing a polyurethane mixture 32, comprising: a mixing chamber 34; a first inlet port 36 for a first liquid component 38; a second inlet port 40 for a second liquid component 42; a rotating body 44 configured for rotating in the mixing chamber so as to mix the two liquid components and to form a polyurethane mixture; and an outlet nozzle 46 configured for releasing the polyurethane mixture. Furthermore, the dispensing head comprises at least one feeding port 48 configured for introducing a gaseous component 50 under pressure in the mixing chamber in a position at least partially upstream the rotating body. The invention further relates to a station and a method for producing semi-worked products 28 of polyurethane.

## Description

### TECHNICAL FIELD

The present invention refers to the field of polyurethane processing, in particular to the field of manufacturing semi-worked products in expanded polyurethane, for example intended for manufacturing footwear.

### BACKGROUND

Polyurethane is a widely known material appreciated in many industries. It consists of two main components, the polyol and the diisocyanate, to which other additives may possibly be added in a smaller amount such as for example small amounts of water, catalysts or dyes.

By way of example and without any limiting intent, specific reference will be made below to the sector of the production of footwear and of the respective semi-worked products. As the skilled person can well understand, the present invention can be used without any structural modification in other sectors in which polyurethane is commonly used, such as for example in the sector of furniture, vehicle upholstery, production of panels or of other semi-worked products, etc.

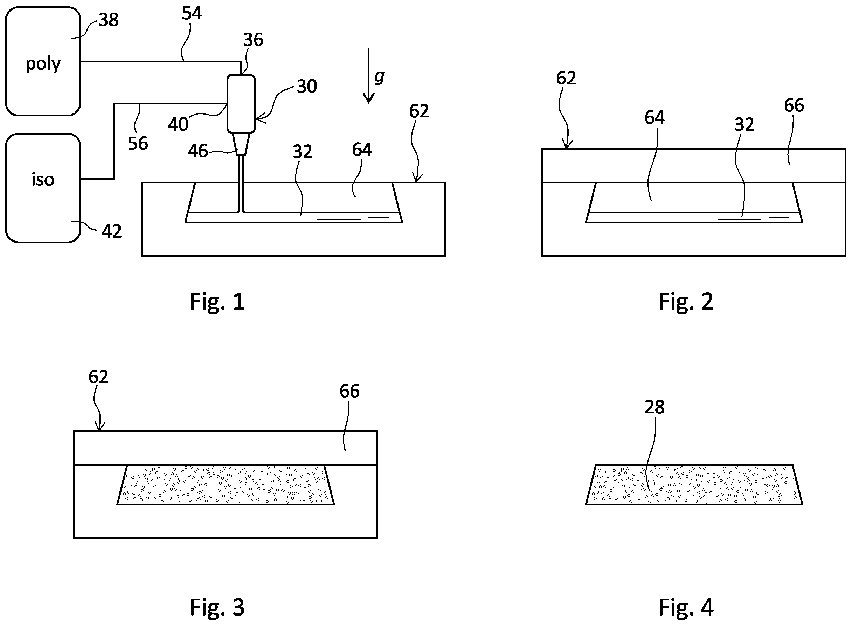

With particular reference to Figures 1 to 4, the technique commonly used for producing semi-worked products of polyurethane is briefly described. The polyol (in the figures also referred to in short as "poly") and the diisocyanate (in short as "iso"), both in the liquid state, are fed separately to a dispensing head (Figure 1). The dispensing head comprises a mixing chamber inside which a rotating body is placed that provides for mixing the two components. The liquid mixture that is created in this way is then released through an outlet nozzle. The presence of any additives does not modify this process in any way.

The nozzle then pours the polyurethane mixture in the liquid state into a mold, the cavity of which is shaped so as to define the final shape of the semi-worked product. As soon as the liquid polyurethane mixture has been poured, the mold is closed by means of a specific cover, so as to completely delimit the cavity and give it the desired shape (Figure 2).

Inside the mold the reaction between the polyol and the diisocyanate generates the polyurethane. In the absence of water, the polyurethane that is obtained is compact, of the type that is used for example for outsoles. Otherwise, if one wishes to obtain a polyurethane foam, it is necessary to add a small amount of water to the polyol. In this case, while the reaction between the polyol and the diisocyanate generates the polyurethane, the reaction between the diisocyanate and the water simultaneously generates carbon dioxide (CO₂) which expands to form micro cavities diffused within the polyurethane volume. In other words, the polyurethane increases its volume, passing from the initial liquid state to the foam state (Figure 3). In about 180 seconds, the polyurethane increases its volume approximately by three times, thus completely filling the cavity of the mold and originating the desired semi-worked product.

After removal from the mold, in 24-48 hours the polyurethane foam reaches the necessary maturation and the semi-worked product is ready for subsequent processing (Figure 4).

This type of processing, called *by pouring,* although widely appreciated, is not without drawbacks.

First of all, pouring poses problems in terms of filling and wetting of the molds, since the plant that generates the mixture of polyol and diisocyanate is not under pressure and the mixture can be dispensed only vertically, letting it fall by gravity from the nozzle of the dispensing head.

A solution to this problem was proposed by the same holder through Italian patent number 102019000023874 entitled TESTA NEBULIZZATRICE (SPRAYING HEAD). This invention provides that a compressed air nebulizer, configured for spraying the polyurethane mixture, is placed downstream of the dispensing head. The jets of compressed air generated by the nebulizer atomize the mixture and entrain it along creating a flow that can be directed more freely than the simple pouring by gravity. It should be noted that in this known solution, the compressed gas (usually air) does not mix with the polyurethane mixture, but merely entrains it in the jet, and then disperses into the environment.

This solution, although widely appreciated, has not dealt with all the problems connected with the traditional processing of the polyurethane, in particular it has not dealt with the problem of the final density of the polyurethane foam.

As a matter of fact, the density of the polyurethane foam obtained cannot be varied arbitrarily with respect to the value that it tends to assume spontaneously for a given formulation of the polyurethane system. In particular, it is only possible to increase the density to a certain extent by compressing the mixture of polyol and diisocyanate as it begins to expand within the cavity of the mold. On the contrary, by using the basic technique described above, it is not possible to reduce the density keeping it below the value that it tends to assume spontaneously.

For this purpose, a technique has been developed that consists of increasing the amount of water mixed with the polyol before feeding it to the dispensing head. In this way, the reaction with the diisocyanate develops a greater amount of gas and therefore increases the volume of the foam more with the same amount of mixture, with the effect of reducing the density thereof.

However, even this technology is not without drawbacks.

Firstly, as already mentioned, the water must be mixed with the polyol before proceeding with the mixing with the diisocyanate. In other words, once the percentage of water necessary to obtain a certain density of the final polyurethane foam has been defined, a batch of polyol must be added with water in the desired amount. Of course, the mixing is irreversible since the water, once mixed, can no longer be separated and removed. The batch of polyol added with water can no longer be used to obtain higher density foams.

A first consequence of this feature of the method is a reduced flexibility in defining the densities of the foam. In fact, the density can only be varied in a net way, passing from one mixture to another containing a different percentage of water. In addition, this solution implies a significant complication in the management of the warehouse stocks, also in view of the fact that the water introduced into the polyol tends to reduce its shelf life. Other consequences, even more serious, can occur if an error is made in the addition of water. In this case, in fact, it may be necessary to dispose of an entire batch of polyol if it is made unusable by an excessive amount of water.

Finally, another disadvantage deriving from the use of water in the polyurethane mixture was noted. The chemical expansion by reaction between water and isocyanate generates the formation of amino terminals (-NH₂) which in turn react with the diisocyanate forming urea bonds. The presence of urea derivatives in the mass of the polyurethane foam tends to worsen its mechanical characteristics, in particular it tends to make the foam stiffer and more fragile than it is if they were absent.

The need is therefore felt for a new type of head for dispensing the polyurethane mixture for producing semi-worked products of polyurethane.

### OBJECTS AND SUMMARY OF THE INVENTION

Aim of the present invention is therefore to overcome the drawbacks highlighted above in relation to the prior art.

In particular, a task of the present invention is to make available a head for dispensing a polyurethane mixture that allows to freely vary the density of the polyurethane foam obtained.

Furthermore, a task of the present invention is to make available a dispensing head that allows the polyurethane mixture to be dispensed more efficiently than the simple pouring by gravity.

Still, a task of the present invention is to make available a molding station that can best benefit from the new dispensing head.

Finally, a task of the present invention is to make available a dispensing head and a molding station which, in addition to the advantages connected to the new technical features introduced, allow to maintain at least in part the advantages obtained by the known solutions.

These and other objects and tasks of the present invention are achieved by means of a head for dispensing a polyurethane mixture in accordance with claim 1, by means of a molding station in accordance with claim 4 and by means of a method in accordance with claim 7.

Further features are identified in the dependent claims. All appended claims form an integral part of the present disclosure.

The invention concerns a head for dispensing a polyurethane mixture, comprising:
- a mixing chamber;
- a first inlet port configured for introducing a first liquid component in the mixing chamber;
- a second inlet port configured for introducing a second liquid component in the mixing chamber;
- a rotating body configured for rotating in the mixing chamber around an axis X so as to mix the two liquid components and to form a polyurethane mixture, and
- an outlet nozzle configured for releasing the polyurethane mixture.

The dispensing head of the invention further comprises at least one feeding port configured for introducing a gaseous component under pressure in the mixing chamber in a position at least partially upstream the rotating body.

Thanks to the particular structure, the dispensing head of the invention allows to freely reduce and vary the density of the polyurethane foam obtained.

Preferably the dispensing head comprises a plurality of feeding ports for introducing the gaseous component under pressure.

The presence of a plurality of ports allows a better distribution of the gaseous component under pressure within the polyurethane mixture.

In accordance with some embodiments, the at least one feeding port for the gaseous component is inclined with respect to axis X.

The inclination of the feeding port allows a better mixing of the gaseous component under pressure within the polyurethane mixture.

The invention also concerns a molding station for producing semi-worked products of polyurethane. The molding station comprises:
- a dispensing head in accordance with what is described above;
- a feeding circuit for the first liquid component;
- a feeding circuit for the second liquid component; and
- a feeding circuit for the gaseous component.

The molding station of the invention allows to make the best use of the dispensing head described above.

Preferably the feeding circuit of the gaseous component is configured for making the gaseous component available at a pressure comprised between 0 bar and 10 bar, even more preferably between 1 bar and 6 bar.

The above pressures are those at which the invention obtains the best results.

Preferably the feeding circuit for the gaseous component further comprises a valve for regulating the flow of the gaseous component.

The presence of the regulating valve allows to regulate the amount of gaseous component dispersed in the polyurethane mixture and therefore the final density of the polyurethane foam.

Preferably the dispensing head is configured for being able to swing while dispensing the polyurethane mixture.

The possibility of swinging the dispensing head while dispensing the polyurethane mixture allows to significantly improve the filling of the mold.

Finally, the invention concerns a method for producing a semi-worked product of polyurethane. The method comprises the steps of:
- providing polyol;
- providing diisocyanate;
- mixing the polyol and the diisocyanate so as to form a polyurethane mixture; and
- dispensing the polyurethane mixture in a mold.
The method of the invention further comprises the steps of:
- providing a gaseous component under pressure;
- introducing the gaseous component in the mass of the polyurethane mixture; and
- dispersing the gaseous component in the mass of the polyurethane mixture before dispensing the polyurethane mixture.

Preferably the method further comprises the step of providing a dispensing head in accordance with what is described above. In addition or alternatively, the method further comprises the step of providing a molding station in accordance with what is described above.

Preferably the gaseous component is carbon dioxide (CO₂).

Preferably, in the step of introducing the gaseous component in the mass of the polyurethane mixture, the gaseous component has a pressure comprised between 0 bar and 12 bar, even more preferably between 1 bar and 6 bar.

Preferably the step of introducing the gaseous component in the mass of the polyurethane mixture comprises the sub-step of varying the pressure of the gaseous component while dispensing the polyurethane mixture.

Preferably the method further comprises the step of using a polyurethane mixture having a cream time longer than 10 seconds.

The various embodiments of the method described above allow the invention to be best realized.

Further features and advantages of the present invention will become more evident from the description of the accompanying drawings.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and reference numerals illustrating structures, components, materials and/or similar elements in different drawings are indicated by similar reference numerals, where appropriate. Moreover, for clarity of illustration, certain references may not be repeated in all drawings.
Figure 1 schematically represents a step of the process for producing a semi-worked product of polyurethane, in accordance with the prior art;
Figure 2 schematically represents a subsequent step of the process of Figure 1;
Figure 3 schematically represents a further step of the process of Figures 1 and 2;
Figure 4 schematically represents a semi-worked product of polyurethane produced with the process of Figures 1 to 3;
Figure 5 schematically represents a step of the process for producing a semi-worked product of polyurethane, in accordance with the invention;
Figure 6 schematically represents a subsequent step of the process of Figure 5;
Figure 7 schematically represents a step of the process for producing a semi-worked product of polyurethane, in accordance with the invention;
Figure 8 schematically represents a subsequent step of the process of Figure 7;
Figure 9 schematically represents a sectional view of a head for dispensing a polyurethane mixture in accordance with the invention;
Figure 10 schematically represents a sectional view of another head for dispensing a polyurethane mixture in accordance with the invention;
Figure 11 represents a view, partially in section, of another molding station comprising a head for dispensing a polyurethane mixture in accordance with the invention;
Figure 12 represents a view, partially in section, of a further molding station comprising a head for dispensing a polyurethane mixture in accordance with the invention;
Figure 13 schematically represents a side view of a head for dispensing a polyurethane mixture in accordance with the invention;
Figure 14 schematically represents a side view of a head for dispensing a polyurethane mixture in accordance with the invention;
Figure 15 schematically represents a side view of a head for dispensing a polyurethane mixture in accordance with the invention;
Figure 16 schematically represents a view of a section similar to that operated along trace XVI-XVI of Figure 13;
Figure 17 schematically represents, in a view similar to that of Figure 16, another embodiment of the head for dispensing a polyurethane mixture in accordance with the invention;
Figure 18 schematically represents a step of a process for producing a semi-worked product of polyurethane, in accordance with the invention;
Figure 19 schematically represents a step of a process for producing a semi-worked product of polyurethane, in accordance with the invention; and
Figure 20 schematically represents a view in the direction indicated with XX-XX in Figure 19.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The description addresses in detail the peculiar technical aspects and features of the invention, while the per se known aspects and technical features can only be mentioned. In these respects, what is stated above with reference to the prior art remains valid.

The use of "for example", "etc.", "or" indicates non-exclusive alternatives without limitation, unless otherwise indicated. The use of "comprises" and "includes" means "comprises or includes, but not limited to", unless otherwise indicated.

The invention is intended to operate in the presence of the gravity acceleration g. Based on the gravity acceleration g, the vertical direction and the horizontal directions are defined uniquely. Similarly, with respect to the gravity acceleration g, the terms "high", "upper", "above" and similar are defined with respect to the terms "low", "lower", "below" and similar.

The invention provides for a flow of fluids (liquid and/or gaseous) defining a unique direction. In relation to this direction, the terms "upstream" and "downstream" are defined.

The expression "polyurethane mixture" means the mixture formed mainly by polyol and diisocyanate, both liquid, to which other secondary additives may possibly be added in minor amount such as, for example, catalysts or dyes. Such a mixture has a consistency that varies rapidly over time. It, which is initially liquid like its two main components, in short assumes a creamy consistency, which it maintains for a certain period of time, called "cream time". After the cream time has elapsed, the polyurethane mixture begins to give rise to the characteristic foam and to increase its volume. The use of the expression "polyurethane mixture" therefore refers to the initial steps of the process, immediately after mixing when the mixture is still liquid or at most in the cream state, whereas the expression "polyurethane foam" will be used for the subsequent steps.

The duration of the cream time depends on several factors, including the composition of the polyurethane mixture and the temperature. The longest cream times occur with mixtures without catalysts, in which the reaction between the polyol and the diisocyanate takes place at their own spontaneous speed. The addition of catalysts in the polyurethane mixture makes the reaction progressively faster, reducing the cream time. Indicatively, the cream time can vary from about 5 seconds (in the presence of a large amount of catalysts) to about 20 seconds (in the absence of catalysts).

The invention concerns a head 30 for dispensing a polyurethane mixture 32. The dispensing head 30 comprises:
- a mixing chamber 34;
- a first inlet port 36 configured for introducing a first liquid component 38 in the mixing chamber 34;
- a second inlet port 40 configured for introducing a second liquid component 42 in the mixing chamber 34;
- a rotating body 44 configured for rotating in the mixing chamber 34 around an axis X so as to mix the two liquid components 38, 42 and to form a polyurethane mixture 32, and
- an outlet nozzle 46 configured for releasing the polyurethane mixture 32.

Furthermore, the dispensing head 30 comprises at least one feeding port 48 configured for introducing a gaseous component 50 under pressure in the mixing chamber 34 in a position at least partially upstream the rotating body 44.

In a manner known per se, the mixing chamber 34 has an elongated shape along the rotation axis of the rotating body 44 and accommodates the latter so as to define a fluid path that connects the inlet ports 36, 40 to the outlet nozzle 46. Preferably the rotating body 44, in a manner known per se, is rotated by an outer motor (not shown) and has a shape suitable for promoting the intimate mixing between the components of the polyurethane mixture 32. For example, the rotating body 44 may comprise a plurality of fins or protrusions which, thanks to the rotation, induce a considerable turbulence in the flow passing through the mixing chamber 34.

The outlet nozzle 46 in turn defines an axis along which the flow of the polyurethane mixture 32 moves just before it is released to the outside. As the skilled person can well understand, the rotation axis of the rotating body 44 and the axis of the outlet nozzle 46 have different natures and do not necessarily have to have a relationship between them. Despite this, in the following it is meant that these two axes coincide in a single axis X. This solution is in fact adopted in most embodiments and allows significant constructive simplifications of the dispensing head 30.

As mentioned above, the dispensing head 30 comprises at least one feeding port 48 for a gaseous component 50 under pressure. Said feeding port 48 opens onto the mixing chamber 34 in a position at least partially upstream the rotating body 44, so as to introduce - in use - the gaseous component 50 under pressure into the polyurethane mixture 32 where it is being formed or it has just been formed. In this way the polyurethane mixture 32 added with the gaseous component 50 passes through at least a part of the mixing chamber 34 subjected to the action of the rotating body 44.

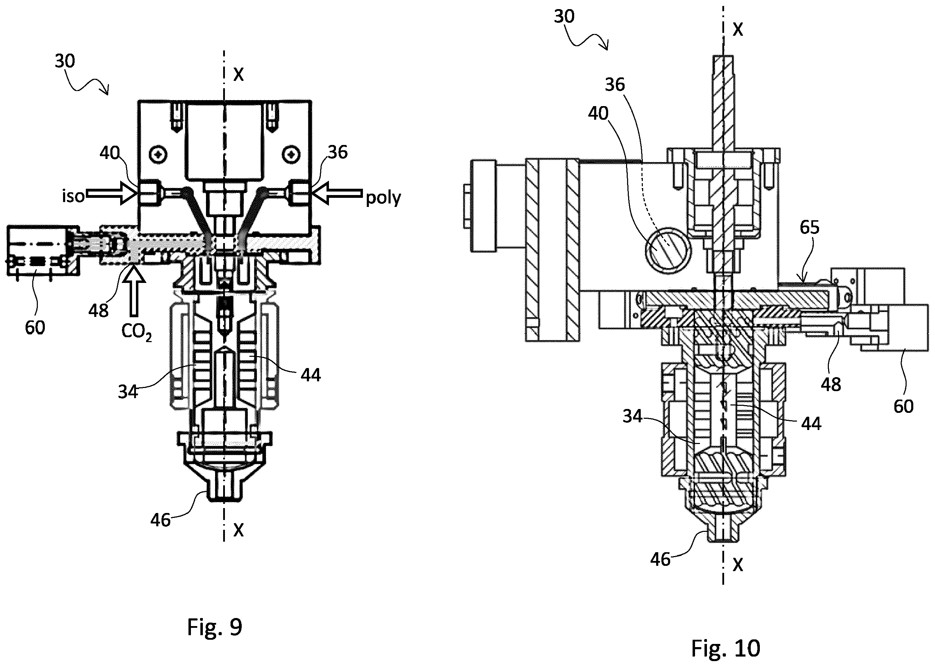

In accordance with the embodiments of Figures 9, 13 and 15, the feeding port 48 is positioned upstream the mixing chamber 34 so as to introduce the gaseous component 50 under pressure into the polyurethane mixture 32 while the latter begins to form. In these embodiments, the polyurethane mixture 32 added with the gaseous component 50 passes completely through the mixing chamber 34 and is subjected to the action of the entire rotating body 44, thus ensuring a particularly effective mixing.

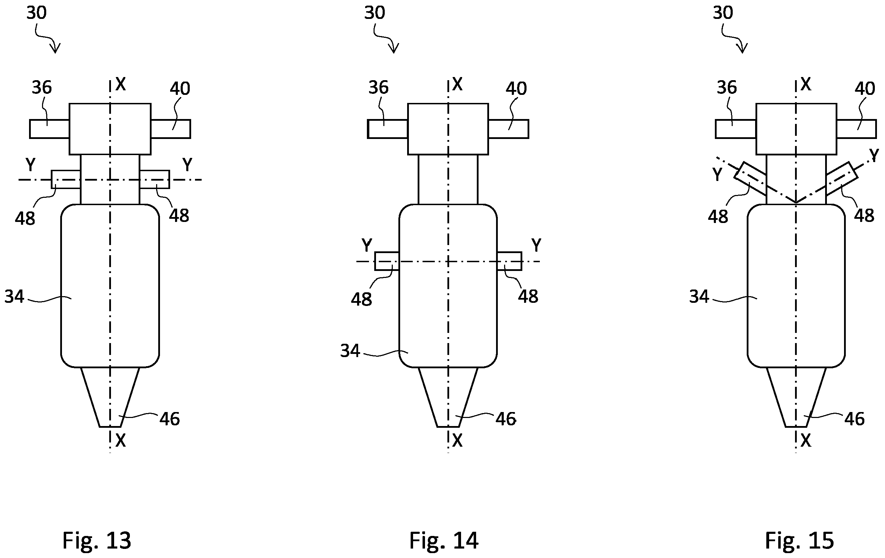

In accordance with other embodiments (e.g., that of Figure 14), the feeding port 48 may be placed at a different position, e.g., further downstream, towards the outlet nozzle 46. More forward positions of the feeding port 48 may prove useful in some cases, for example to limit the effects of the back pressure generated by the supply of the gaseous component 50. The back pressure could in fact, in some configurations of the dispensing head 30, alter the flow of one or both of the liquid components 38, 42.

In accordance with the embodiment of Figure 9, the dispensing head 30 comprises a single feeding port 48 for the gaseous component 50. In accordance with other embodiments (e.g., those of Figures 13-17), the dispensing head 30 may comprise a plurality of feeding ports 48. The presence of more than one feeding port 48 may be useful for subdividing the flow rate of the gaseous component 50 under pressure and distributing it at different points. For example, a plurality of feeding ports 48 may be positioned in the same position with respect to the axis X and distributed along the periphery of the dispensing head 30.

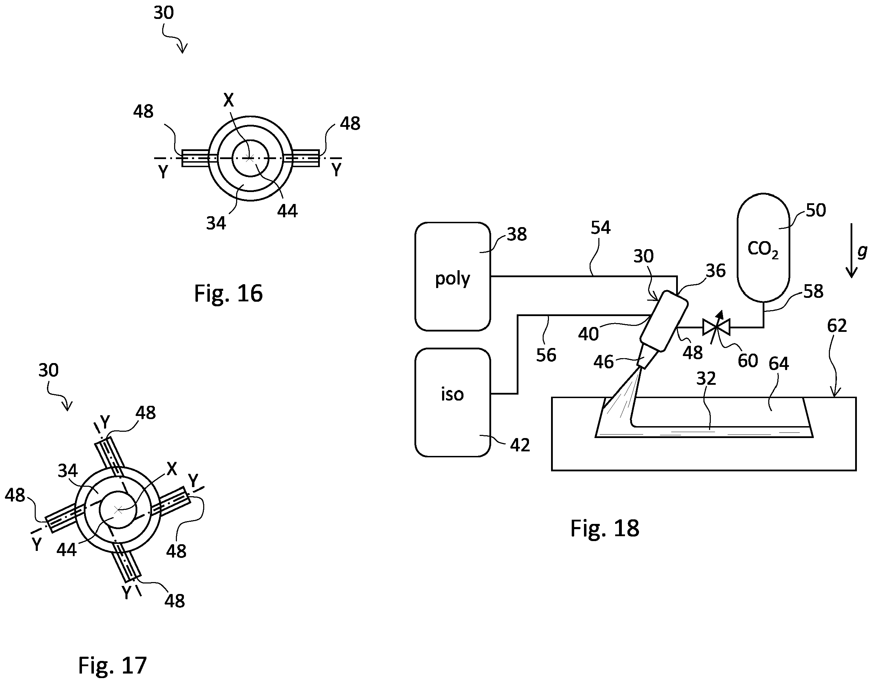

In accordance with the embodiments of Figures 9, 13, 14, and 16, the feeding port 48 is oriented in a radial direction with respect to the axis X; in other words, the axis Y of the end section of the conduit forming the feeding port 48 is perpendicular to the axis X. In accordance with other embodiments (e.g., those of Figures 15 and 17), the feeding port 48 may be inclined with respect to the axis X. More particularly, the axis Y of the end section of the conduit forming the feeding port 48 may be inclined with respect to the axis X. The inclination may be detected in a radial or side view (like in the example of Figure 15), in an axial view (like in the example of Figure 17), or in both views. The inclination of the feeding port 48 allows to introduce the gaseous component 50 under pressure with a non-zero speed in the tangential and/or axial directions. In this way it is possible to improve the turbulence inside the mixing chamber 34, so as to obtain a particularly effective mixing.

In accordance with a second aspect, the invention concerns a molding station 52 for semi-worked products 28 of polyurethane. The molding station 52 of the invention comprises:
- a dispensing head 30 in accordance with what is described above;
- a feeding circuit 54 for the first liquid component 38;
- a feeding circuit 56 for the second liquid component 42; and
- a feeding circuit 58 for the gaseous component 50.

In a manner known per se, the two liquid components 38, 42 are preferably polyol and diisocyanate, the feeding circuits 54, 56 of which are widely known to the skilled person.

The gaseous component 50 is preferably chosen in such a way as not to intervene chemically in the reaction between the polyol and the diisocyanate. The role of the gaseous component 50 is simply of a physical nature and consists in dispersing in the mass of the polyurethane mixture 32 forming a quantity of micro-bubbles in order to increase the volume thereof. Preferably the gaseous component 50 is carbon dioxide (CO₂). In other embodiments, the gaseous component 50 may comprise other inert gases, such as for example nitrogen (N), argon (Ar), and krypton (Kr), either pure or in admixture with each other or in admixture with carbon dioxide (CO₂).

Preferably, the feeding circuit 58 of the gaseous component 50 is configured for making the gaseous component 50 available at a pressure comprised between 0 bar and 10 bar, preferably between 1 bar and 6 bar. The feeding pressure is understood here not as an absolute value, but as an incremental value with respect to the atmospheric pressure, conventionally considered equal to 1 bar.

Preferably, the feeding circuit 58 for the gaseous component 50 further comprises a valve 60 for regulating the flow (i.e. the pressure and/or the flow rate) of the gaseous component 50. In some embodiments, the regulating valve 60 comprises a plurality of sub-valves, each of which can control a fraction of the flow in a binary manner (open/closed). In this way, by opening all the sub-valves, full flow is obtained, by closing them all, zero flow is obtained and in the intermediate configurations, a flow regulation, albeit discrete, is obtained. In accordance with other embodiments, the regulating valve 60 may be of the proportional type, i.e. which allows a continuous regulation of the flow, for example of the pressure with which the gaseous component 50 is introduced into the dispensing head 30.

The variation in feeding pressure can take place within a range of values comprised between a minimum, close to the atmospheric pressure, and a maximum, close to the maximum pressure made available by the feeding circuit 58 of the gaseous component 50. Preferably, the valve 60 is configured for being able to impose a continuous variation in pressure, even while dispensing the polyurethane mixture 32.

Preferably the molding station 52 in accordance with the invention further comprises a mold 62. In a manner known per se, the mold 62 comprises a plurality of walls suitable for at least partially defining a cavity 64 having the shape complementary to the shape of the semi-worked product 28 to be obtained.

In accordance with some embodiments, the mold 62 comprises a cover 66 suitable for closing the cavity 64 inside the mold 62. In a manner well known per se to the skilled person, the coupling between the mold 62 and the relative cover 66 defines a closure of the cavity 64 which, while confining the polyurethane foam during expansion, allows the venting of the gas (typically CO₂) that develops during these steps.

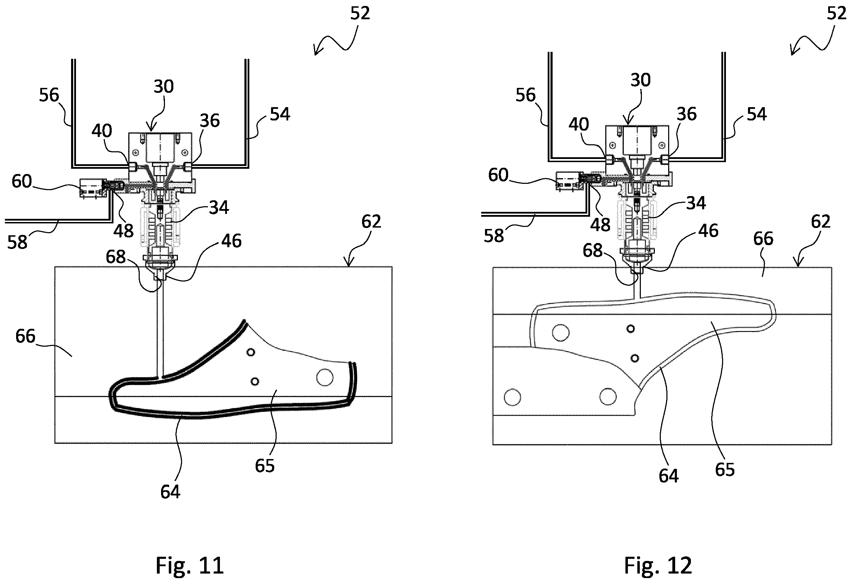

In accordance with some embodiments, the mold 62 further comprises a counter-mold 65 suitable for partially occupying the cavity 64 inside the mold 62. See Figures 11, 12 and 19 in this regard.

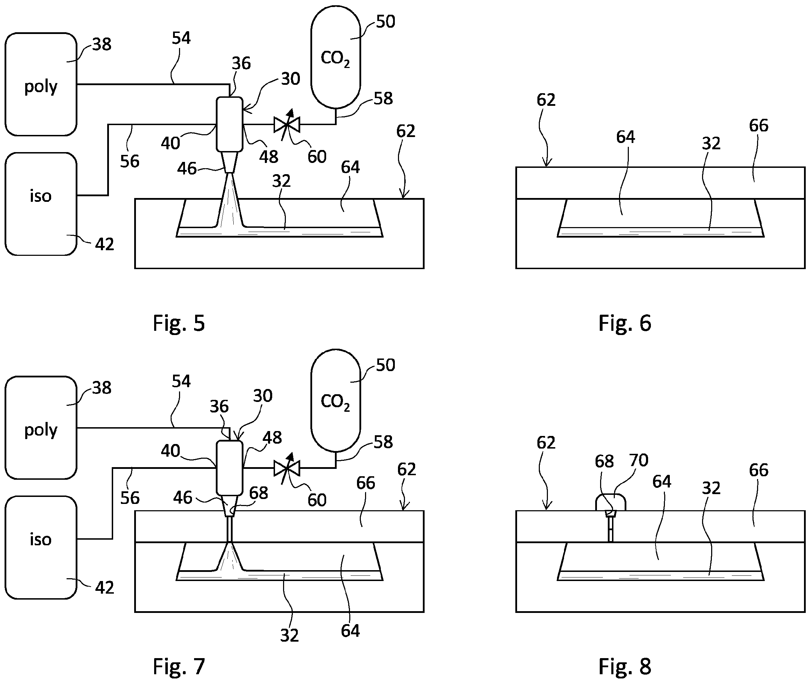

In accordance with some embodiments, the cover 66 of the mold 62 has no opening. In this case, the mold 62 is defined as "open", since the dispensing of the polyurethane mixture 32 (as will be described later) must take place in the mold 62 without a cover 66 (see Figures 5 and 18-20) and the cover 66 itself must be coupled to the mold 62 later, before the polyurethane mixture 32 begins to form the foam (see Figure 6).

In accordance with other embodiments, the cover 66 of the mold 62 comprises an opening suitable for receiving the outlet nozzle 46 of the dispensing head 30. In this case the mold 62 is defined as "closed", since the dispensing of the polyurethane mixture 32 (as will be described later) can take place with the cover 66 coupled to the mold 62 (see Figures 7, 11 and 12). Preferably, the opening 68 for the outlet nozzle 46 can be closed with a specific cap 70, before the polyurethane mixture 32 begins to form the foam (see Figure 8).

Incidentally, the processing steps relating to the invention subsequent to those schematized in Figures 6 and 8, are completely similar to those of Figures 3 and 4 described above in relation to the prior art.

As the skilled person can well understand, the use of the gaseous component 50 under pressure allows to obtain a dispensing of the polyurethane mixture 32 which is more dynamic than the simple pouring by gravity typical of the solutions of the prior art. At the end of the outlet nozzle 46 of the dispensing head 30 of the invention - in use - the polyurethane mixture 32 forms a real jet. For this reason, the dispensing head 30 of the invention can be used also in molding stations 52 comprising closed molds 62 with complex shapes (such as for example those of Figures 11 and 12) that could not be used with the simple pouring by gravity. The dispensing under pressure allows the polyurethane mixture 32 to potentially reach any position within the mold 62 while still in the liquid or cream state.

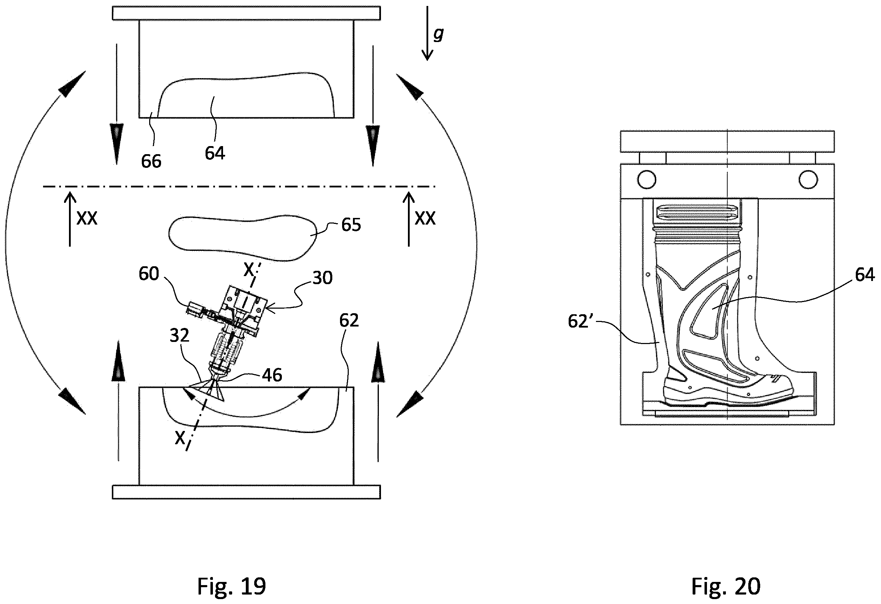

In addition, the dispensing head 30 of the invention can also be used in molding stations 52 comprising open molds 62 with complex shapes (for example comprising pronounced undercuts) that could hardly be used with the simple pouring by gravity, since in this case the polyurethane mixture 32 is fed only in the vertical direction. Otherwise, the dispensing head 30 of the invention allows to feed the polyurethane mixture 32 also with a jet having a direction different from the vertical, such as for example shown schematically in Figures 18 and 19. Preferably, the dispensing head 30 is configured for being able to swing while dispensing the polyurethane mixture 32.

A particular embodiment of the invention is described below with reference to Figures 19 and 20. Figure 19 shows a particular form of mold 62, in which the cover 66 and the same mold 62 have substantially the same shape and perform the function of two half-molds. The mold 62 further comprises a counter-mold 65 that partially occupies the cavity 64. As shown schematically in Figure 19, the dispensing head 30 of the invention is free to swing while dispensing the polyurethane mixture 32. In this way it is possible to wet all the points of the inner walls of the mold 62 during the cream time of the polyurethane mixture 32, so that the formation of the polyurethane foam obtains a complete and even filling of the cavity 64.

More particularly, Figures 19 and 20 show a mold 62 shaped to produce a footwear, in particular a boot. In this case the shape of the cavity 64 defined by the mold 62, by the cover 66 and by the counter-mold 65 is particularly complex and hard to fill completely and evenly. The dispensing head 30 of the invention allows to dispense the polyurethane mixture 32 in a diffused manner in the mold 62, to introduce the counter-mold 65 and to close the mold 62 by lowering the cover 66; all these operations can be carried out within the cream time of the polyurethane mixture 32. Subsequently, it is possible to overturn the closed mold 62, to lift the mold 62, to remove the counter-mold 65 and to repeat the operation of dispensing the polyurethane mixture 32 in the cover 66, in the same way already described above for the mold 62. At the end of this operation, the definitive closure of mold 62 and cover 66 allows to obtain a polyurethane boot of excellent quality.

As the skilled person can well understand, the dispensing head 30 and the molding station 52 in accordance with the invention can be integrated extremely easily in a traditional production plant, i.e. without requiring any structural modification. Furthermore, the dispensing head 30 and the molding station 52 of the invention are perfectly compatible with the accessories and the technologies commonly used in the production of semi-worked products 28 of polyurethane. For example, the dispensing head 30 is perfectly compatible with the devices commonly used for adding further components to the polyurethane mixture 32. Typically, to add dyes to the polyurethane mixture 32 a specific component (commonly called a "colour plate") is added, which allows one or more dyes to be introduced upstream the mixing chamber. The dispensing head 30 of the invention allows the application of the colour plates 35 commonly used in the prior art. Figure 10 schematically shows a dispensing head 30 in accordance with the invention on which a colour plate 35 of conventional type has been mounted.

Furthermore, the molding station 52 of the invention, and in particular the molds 62 used in it, are perfectly compatible with the use of the techniques commonly used to improve the quality of the semi-worked products 28 of polyurethane that are produced. For example, the molds 62 used in the molding station 52 of the invention are perfectly compatible with the preliminary provision of finishing accessories, before dispensing the polyurethane mixture 32. Such finishing accessories may for example be inserts or cover films, for example of thermoplastic polyurethane (TPU), or even finishing paints applied on the walls of the mold 62.

In accordance with a third aspect, the invention concerns a method for producing a semi-worked product 28 of polyurethane. The method of the invention comprises the steps of:
- providing the polyol;
- providing the diisocyanate;
- mixing the polyol and diisocyanate so as to form a polyurethane mixture 32; and
- dispensing the polyurethane mixture 32 in a mold 62.

The method of the invention further comprises the steps of:
- providing a gaseous component 50 under pressure;
- introducing the gaseous component 50 in the mass of the polyurethane mixture 32; and
- dispersing the gaseous component 50 in the mass of the polyurethane mixture 32 before dispensing the polyurethane mixture 32.

Preferably the method of the invention is completed by means of a dispensing head 30 and/or by means of a molding station 52 in accordance with what is described above.

Preferably the gaseous component 50 under pressure is chosen in such a way as not to intervene chemically in the reaction between the polyol and the diisocyanate. Preferably the gaseous component 50 is carbon dioxide (CO₂).

Preferably the method of the invention comprises the step of using a polyurethane mixture 32 having a relatively long cream time, for example longer than 10 seconds. In fact, a relatively long cream time allows to well wet the inner walls defining the cavity 64 of the mold 66, thus obtaining an even distribution of the polyurethane mixture 32 and therefore a high quality semi-worked product 28. As known to the skilled person, the cream time is a rather important parameter in the polyurethane sector and is usually mentioned in the data sheet provided together with the materials. In fact, the industry usually requires short cream times to reduce the cycle times and to increase productivity. The reduction of the cream time is achieved by increasing the catalysts present in the polyurethane mixture 32. Conversely, in order to carry out the invention, it is preferable to reduce or cancel the catalysts present in the polyurethane mixture 32 in order to extend the cream time thereof.

In accordance with some embodiments, the method of the invention comprises the step of dispensing the polyurethane mixture 32 in an open mold 62 (as schematically shown in Figures 5 and 18). In some embodiments, the step of dispensing the polyurethane mixture 32 in an open mold 62 comprises the sub-step of tilting the dispensing head 30 during dispensing, i.e., it comprises the sub-step of tilting the axis of the outlet nozzle 46 with respect to the vertical direction (Figure 18). Preferably, the step of dispensing the polyurethane mixture 32 in the open mold 62 is followed by the step of closing the mold 62 by coupling the relative cover 66 (Figure 6).

In accordance with other embodiments, the method of the invention comprises the step of dispensing the polyurethane mixture 32 in a closed mold 62 (as schematically shown in Figure 7). Preferably, the step of dispensing the polyurethane mixture 32 in the closed mold 62 is followed by the step of closing the opening 68 for the outlet nozzle 46 with a specific cap 70 (Figure 8).

Preferably, in the step of introducing the gaseous component 50 into the mass of the polyurethane mixture 32, the gaseous component 50 has a pressure comprised between 0 bar and 12 bar, preferably between 1 bar and 6 bar. In accordance with some embodiments, this step comprises the sub-step of varying the pressure while dispensing the polyurethane mixture 32. Preferably, the variation in pressure while dispensing takes place with continuity, for example by means of a valve 60.

Studies conducted by the Applicant have led to the determination that the decrease in density of the polyurethane foam obtained thanks to the invention can in some cases exceed 30% with respect to the normal density. More in particular, with a normal density that is around 0.4 g/cm³, the invention has made it possible to obtain a polyurethane foam which, all other production parameters being equal, has a density that can reach only 0.28 g/cm³.

As the skilled person can well understand, such a decrease in density is equivalent to an equal decrease in the amount of polyurethane mixture 32 necessary to obtain a semi-worked product 28 having a predetermined volume. The advantages in economic and environmental terms deriving from such a decrease in the use of polyol and diisocyanate will therefore be apparent to the skilled person.

The Applicant also conducted studies on the mechanical characteristics of the polyurethane foams obtained in accordance with the invention, experimentally evaluating their tear strength, load and elongation at break, hardness (Shore A). These studies have led to the determination that, with a decrease in density, in some cases the polyurethane foam of the invention maintains mechanical characteristics similar to those of the polyurethane foams of known type. In some specific cases the mechanical characteristics of the polyurethane foam in accordance with the invention are even slightly better than in the prior art. For example, thanks to the invention, a polyurethane foam has been obtained which, compared to a traditional polyurethane foam, with a decrease in density equal to about 2.5%, has a higher breaking strength by about 5%.

As the skilled person can well understand, the invention overcomes the drawbacks highlighted above in relation to the prior art.

In particular, the invention makes available a head 30 for dispensing a polyurethane mixture 32 that allows the density of the polyurethane foam obtained to be freely reduced and varied. In particular, the addition of the gaseous component 50 in the polyurethane mixture 32 allows to decrease the density of the polyurethane foam obtained with respect to the minimum density that can be obtained with the prior art. Furthermore, the invention allows to vary the density while dispensing the polyurethane mixture 32, thus obtaining a polyurethane foam with variable density. Moreover, unlike the addition of water in the polyol, the solution of the invention does not introduce any difficulties in the management of the warehouse or expose the operator to any irreversible errors.

Furthermore, the present invention makes available a dispensing head 30 that allows the polyurethane mixture 32 to be dispensed more efficiently than the simple pouring by gravity. In particular, the dispensing under pressure allows a better filling of the molds 62, whether they are open or closed.

Still, the present invention makes available a molding station 52 that best benefits from the dispensing head 30.

Finally, the present invention makes available a dispensing head 30 and a molding station 52 which, in addition to the advantages connected to the new technical features introduced, allow to maintain at least in part the advantages obtained by the known solutions.

In conclusion, all the details can be replaced with other technically equivalent elements; the features described in connection with a specific embodiment can also be used in other embodiments; the materials used, as well as the contingent shapes and dimensions, can be any according to the specific implementation requirements without thereby falling outside the scope of protection of the following claims.

## Claims

1. Head (30) for dispensing a polyurethane mixture (32), comprising:
- a mixing chamber (34);
- a first inlet port (36) configured for introducing a first liquid component (38) in the mixing chamber (34);
- a second inlet port (40) configured for introducing a second liquid component (42) in the mixing chamber (34);
- a rotating body (44) configured for rotating in the mixing chamber (34) around an axis X so as to mix the two liquid components (38, 42) and to form a polyurethane mixture (32), and
- an outlet nozzle (46) configured for releasing the polyurethane mixture (32); wherein the dispensing head (30) further comprises at least one feeding port (48) configured for introducing a gaseous component (50) under pressure in the mixing chamber (34) in a position at least partially upstream the rotating body (44).

2. Dispensing head (30) according to claim 1, comprising a plurality of feeding ports (48) for introducing the gaseous component (50) under pressure.

3. Dispensing head (30) according to claim 1 or 2, wherein the at least one feeding port (48) for the gaseous component (50) is inclined with respect to axis X.

4. Molding station (52) for producing semi-worked products (28) of polyurethane, comprising:
- a dispensing head (30) according to one or more of the preceding claims;
- a feeding circuit (54) for the first liquid component (38);
- a feeding circuit (56) for the second liquid component (42); and
- a feeding circuit (58) for the gaseous component (50).

5. Station according to the preceding claim, wherein the feeding circuit (58) for the gaseous component (50) is configured for making the gaseous component (50) available at a pressure comprised between 0 bar and 10 bar, preferably between 1 bar and 6 bar.

6. Station according to claim 4 or 5, wherein the feeding circuit (58) for the gaseous component (50) further comprises a valve (60) for regulating the flow of the gaseous component (50).

7. Station according to one or more of claims 4 to 6, wherein the dispensing head (30) is configured for being able to swing while dispensing the polyurethane mixture (32).

8. Method for producing a semi-worked product (28) of polyurethane, comprising the steps of:
- providing polyol (38);
- providing diisocyanate (42);
- mixing the polyol and the diisocyanate (38, 42) so as to form a polyurethane mixture (32); and
- dispensing the polyurethane mixture (32) in a mold (62),
wherein the method further comprises the steps of:
- providing a gaseous component (50) under pressure;
- introducing the gaseous component (50) in the mass of the polyurethane mixture (32); and
- dispersing the gaseous component (50) in the mass of the polyurethane mixture (32) before dispensing the polyurethane mixture (32).

9. Method according to the preceding claim, further comprising the step of providing a dispensing head (30) according to one or more of claims 1 to 3 and/or the step of providing a molding station (52) according to one or more of claims 4 to 7.

10. Method according to claim 8 or 9, wherein the gaseous component (50) comprises carbon dioxide (CO₂).

11. Method according to one or more of the claims 8 to 10, wherein, in the step of introducing the gaseous component (50) in the mass of the polyurethane mixture (32), the gaseous component (50) has a pressure comprised between 0 bar and 12 bar, preferably between 1 bar and 6 bar.

12. Method according to one or more of the claims 8 to 11, wherein the step of introducing the gaseous component (50) in the mass of the polyurethane mixture (32) comprises the sub-step of varying the pressure of the gaseous component (50) while dispensing the polyurethane mixture (32).

13. Method according to one or more of claims 8 to 12, further comprising the step of using a polyurethane mixture (32) having a cream time longer than 10 seconds.
